# EUROPEAN PATENT APPLICATION

(11) **EP 4 376 280 A1**
(43) Date of publication of application: **29.05.2024**
(21) Application number: 22210035.6
(22) Date of filing: 28.11.2022
(51) Int. Cl.: H02M 1/088, H02M 1/00, H02M 1/08, H02M 7/483, H02M 7/487, H02M 7/5387

(54) **METHOD FOR OPERATING A GATE DRIVER SYSTEM FOR A MULTI-LEVEL CONVERTER SYSTEM, DATA PROCESSING APPARATUS, COMPUTER PROGRAM, COMPUTER-READABLE STORAGE MEDIUM, GATE DRIVER SYSTEM, MULTI-LEVEL CONVERTER SYSTEM, AND VEHICLE**

(71) Applicant: VOLVO CAR CORPORATION, 405 31 Göteborg (SE)
(72) Inventor: MADEMLIS, Georgios, 40531 Göteborg (SE); ORBAY, Raik, 40531 Göteborg (SE); TORSTENSSON, Per, 40531 Göteborg (SE)
(74) Representative: Maiwald GmbH

(57) **Abstract**

The disclosure relates to a method for operating a gate driver system (20) for a multi-level converter system (14). The multi-level converter system (14) has a number of cascaded switching modules (24, 26, 30, 32). The gate driver system (20) comprises at least two gate driver units (36, 38, 40, 42), each being configured to operate an associated switching module (24, 26, 30, 32). The method comprises providing at least a first subset (A) and a second subset (B) of gate driver units (36, 38, 40, 42) and assigning a first switching speed to the gate driver units (36, 38, 40, 42) of the first subset (A) and a second switching speed to the gate driver units (36, 38, 40, 42) of the second subset. A first switching control signal is provided to the switching modules (24, 26, 30, 32) being associated with the gate driver units (36, 38, 40, 42) of the first subset (A) and a second switching control signal is provided to the switching modules (24, 26, 30, 32) being associated with the gate driver units (36, 38, 40, 42) of the second subset (B). Moreover, a corresponding data processing apparatus (44), computer program (52), and computer-readable storage medium (50) are described. Furthermore, a gate driver system (20), a multi-level converter system (14), and a vehicle are presented.

## Description

The present disclosure relates to a method for operating a gate driver system for a multi-level converter system.

Moreover, the present disclosure is directed to a corresponding data processing apparatus, a corresponding computer program, and a corresponding computer-readable storage medium.

Additionally, the present disclosure relates to a gate driver system comprising at least two gate driver units, wherein each gate driver unit is configured to operate an associated switching module of a multi-level converter system.

Furthermore, the present disclosure is directed to a multi-level converter system.

The present disclosure is further directed to a vehicle.

In the present context, a converter system is a system that is configured to transform an AC (alternating current) input signal into a DC (direct current) output signal, a DC input signal into an AC output signal or a DC input signal into a different DC output signal. In other words, a converter system summarizes inverters, rectifiers and DC-DC converters.

The term multi-level defines converter systems which are able to provide more than one voltage level when being operated. For example, a three-level converter system is able to generate three different voltage levels when being operated.

Such multi-level converter systems normally comprise a number of switching modules for performing the desired conversion. A so-called gate driver system is used to operate these switching modules, i.e. to transition the switching modules between different switching states.

Known gate driver systems usually are configured to switch the associated switching modules of the multi-level converter system relatively fast, i.e. at a relatively fast switching rate. Fast switching transients for the switching modules lead to comparatively low switching losses. In other words, the efficiency of the multi-level converter system is enabled by fast switching.

Since fast switching produces electromagnetic interferences or, more generally speaking noise in the electromagnetic spectrum, known multi-level converter systems are equipped with filter means which reduce or eliminate the electromagnetic interferences.

It is an objective of the present disclosure to improve such gate driver systems.

The problem is at least partially solved or alleviated by the subject matter of the independent claims of the present disclosure, wherein further examples are incorporated in the dependent claims.

According to a first aspect, there is provided a method for operating a gate driver system for a multi-level converter system. The multi-level converter system has at least one half-bridge comprising a number of cascaded switching modules. The gate driver system comprises at least two gate driver units, wherein each gate driver unit is configured to operate an associated switching module of the multi-level converter system. The method comprises:
- providing at least a first subset of gate driver units and a second subset of gate driver units, the subsets of gate driver units being overlap-free,
- assigning a first switching speed to the gate driver units of the first subset and a second switching speed to the gate driver units of the second subset, wherein the switching speeds are different, and
- providing a first switching control signal to the switching modules being associated with the gate driver units of the first subset using the gate driver units of the first subset, wherein the first switching control signal is configured to trigger switching of the associated switching modules at the first switching speed and providing a second switching control signal to the switching modules being associated with the gate driver units of the second subset using the gate driver units of the second subset, wherein the second switching control signal is configured to trigger switching of the associated switching modules at the second switching speed.

It is noted that the number of switching modules and the number of gate driver units correspond to each other. This means that for each switching module, there is provided one gate driver unit. It is additionally noted that a gate driver unit is a part of the gate driver system which is specifically configured to drive a gate of an associated switching module. Consequently, the gate driver units of the first subset may make the associated switching modules switch relatively fast, for example. This has the effect that comparatively low switching losses occur. However, comparatively high electromagnetic interferences may be created. At the same time, the gate driver units of the second subset may make the associated switching modules switch relatively slow, for example. This has the effect that only comparatively low electromagnetic interferences are generated. At the same time, the switching losses are comparatively high. Being overlap-free means that each gate driver unit can belong to one of the subsets only. Of course, also the opposite configuration is possible. Altogether, a good trade-off may be reached between electromagnetic interferences and switching losses. In other words acceptable switching losses can be combined with acceptable electromagnetic interferences. Compared to known gate driver systems, filtering means or filters for reducing electromagnetic interferences may be eliminated.

In order to be able to provide a switching control signal to an associated switching module, the relevant gate driver unit may be provided with a switching state reference signal. The switching state reference signal carries an information on the switching state to be achieved at the associated switching module. In simplified words, the switching state reference signal carries the information whether the associated switching module shall be switched on or off. Thus, the method may further comprise determining a switching state reference signal for each of the gate driver units.

It is noted that the number of switching modules and the number of gate driver units is not limited. Thus, it is as well possible to provide three or more subsets of gate driver units and to trigger three or more different switching speeds.

It is additionally noted that the number of levels, e.g. voltage levels, being realized by the multi-level converter system is also not limited.

The method according to the present disclosure may be applied to the following types of multi-level converter systems: Neutral point clamped converters, active neutral point clamped converters, flying capacitor based converters, T-type inverters, cascaded H-bridge inverters, and modular multilevel converters. It is understood that this list is not limiting.

A switching module of such a multi-level converter system may comprise at least one switching unit, but can also comprise a plurality of interconnected switching units, e.g. on two legs. One switching unit is for example a transistor. Further examples of switching units include insulated-gate bipolar transistors (IGBT) or metal-oxide-semiconductor field-effect transistors (MOSFET) or thyristors. It is also possible to provide a switching module with or without a full bridge.

Such multi-level converter systems and the method for operating a gate of such a multi-level converter system may be applied in air vehicles, ground vehicles, sea vehicles, floating platforms, satellites, spacecrafts, powerplant applications, train systems, signalization, military platforms, remote sensing systems of various types, communication systems and peripheries.

In an example, the method of the present disclosure is used in combination with a multi-level converter system of an electric vehicle.

In an example, the method further comprises determining a first switching speed reference signal for the gate driver units of the first subset. Additionally or alternatively, the method further comprises determining a second switching speed reference signal for the gate driver units of the second subset. Thus, using a first switching speed reference signal and/or a second switching speed reference signal, the switching speed may be controlled in a closed loop. Thus, the assigned switching speed may be controlled in a very precise manner.

It is noted that the first switching speed reference signal is separate from the first switching control signal. The first switching control signal triggers the actual switching, wherein the first switching speed reference signal communicates a desired switching speed. The same is true for the second switching speed reference signal and the second switching control signal.

In an example, the first switching speed reference signal is a pulse width modulation signal. Additionally or alternatively, the second switching speed reference signal is a pulse width modulation signal. Using pulse width modulation signals is a reliable manner to precisely communicate a first switching speed reference and/or a second switching speed reference. In this context, it is also possible to apply asynchronous switching with a variation in pulse width. Then, the first switching speed reference signal and/or the second switching speed reference signal may be called an asynchronous modulation signal.

According to an example, the first switching speed reference signal and/or the second switching speed reference signal is a slew rate reference signal. This means that the switching speed of the switching modules is controlled using slew rate control. In this context, a high slew rate is associated with high switching speeds, i.e. fast switching. A low slew rate is associated with a low switching speed, i.e. slow switching. Using slew rate control, the switching speed may be controlled in a simple and precise manner.

In an example, the slew rate may be controlled by controlling a gate resistance of the associated switching module. This means that the first switching speed reference signal and/or the second switching speed reference signal is a first gate resistance reference signal and/or a second gate resistance reference signal. The gate resistance may be controlled with sufficient speed and reliability.

In an example, the first switching control signal and/or the second switching control signal is a pulse width modulation signal. Thus, the signals actually causing the switching of the associated switching modules are pulse width modulation signals. This has the effect that an associated switching speed may be reliably controlled. At the same time, the conversion task being performed by the multi-level converter systems is performed in a reliable manner.

In an example, the first switching control signal and/or the second switching control signal is a fundamental mode switching signal. Also using fundamental mode switching signals leads to an associated switching speed which may be reliably controlled. At the same time, the conversion task being performed by the multi-level converter systems is performed in a reliable manner.

In an example, the first switching control signal is provided to switching modules being associated to a high voltage region. The high voltage region may be a high voltage region of an electric motor drive power transient. In this context, a high-voltage has to be understood in absolute terms. This means that both a very positive voltage and a very negative voltage are considered to be high voltages. If a half bridge is used, the high, positive voltages may be associated with an upper half bridge and the high, negative voltages may be associated with a lower half bridge. The same applies to full bridge topologies. In the high-voltage region, relatively fast switching is required in order to perform the conversion task of the multi-level converter system with sufficient precision.

In a case in which the gate resistance is controlled in order to control the switching speed, fast switching is associated with a comparatively low gate resistance and slow switching is associated with a comparatively high gate resistance.

In an example, the method further comprises assigning gate driver units to the first subset and assigning gate driver units to the second subset by optimizing an objective function describing switching losses and electromagnetic interferences of the switching modules of the multi-level converter system. This means that the assignment of the gate driver units to a first subset or a second subset is not fixed. Rather, the assignment of the gate driver units to the first subset or to the second subset may be determined by performing a mathematical optimization. This optimization considers switching losses and electromagnetic interferences and is, thus, able to provide an optimized assignment of the gate driver units to the first subset and to the second subset. To this end, the objective function being used in the optimization may comprise a first term describing the electromagnetic interferences and a second term describing switching losses. Each of the first term and the second term may be a weighted. Additionally or alternatively, a mathematical model may be used for determining the switching speed reference signals.

It is noted that the objective function may vary over time. Additionally or alternatively, the objective function may vary as a function of environmental parameters, e.g. temperature, component ageing, actual legislation, market region, customer preferences, further sensitive or non-sensitive components in the surroundings, and/or geo-fencing principles.

In an example, the first switching control signal and the second switching control signal are generated based on a look-up table. This is a simple manner to provide a first switching control signal and the second switching control signal being configured to trigger switching of the associated switching modules at different switching speeds.

In a further example, the switching speed may be chosen as a function of environmental conditions. Consequently, switching losses may be reduced for specific environmental conditions such as extremely warm environmental conditions. This reduces the switching losses and, thus, the heat generation inside the multi-level converter system. In other environmental conditions, such as extreme cold, the switching speed may be chosen to be low in order to artificially create switching losses. The switching losses increase the temperature of the multi-level converter system and thus facilitate a warm-up. As has been mentioned before, the switching speed may be expressed as a slew rate. Additionally or alternatively, the slew rate may be varied as a function of component ageing, actual legislation, market region, customer preferences, further sensitive or non-sensitive components in the surroundings, and/or geo-fencing principles.

In a further example, the switching speeds may all be chosen to be comparatively slow. This has the effect that electromagnetic interferences are strongly reduced. This functionality may be provided as a low electromagnetic emissions mode.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system, e.g. an edge/cloud system. The data processing means or the computer, respectively, may comprise one or more of a processor, a memory, a data interface, a communication unit or the like.

According to a second aspect, there is provided a data processing apparatus comprising means for carrying out the method of the present disclosure. Such a data processing apparatus may be used as a part of a gate driver system. In this case, the data processing apparatus may be called a gate driver controller. In an example in which a slew rate control is used, the data processing apparatus may be called a slew rate controller. Using such a data processing apparatus, a good trade-off may be reached between electromagnetic interferences and switching losses. In other words acceptable switching losses can be combined with acceptable electromagnetic interferences. Compared to known gate driver systems, filtering means for reducing electromagnetic interferences may be eliminated.

According to a third aspect, there is provided a computer program comprising instructions which, when the program is executed by a computer, cause the computer to carry out the method of the present disclosure. The computer program may be executed by a data processing apparatus according to the present disclosure. Such a computer program has the effect that a good trade-off may be reached between electromagnetic interferences and switching losses. In other words acceptable switching losses can be combined with acceptable electromagnetic interferences.

According to a fourth aspect, there is provided a computer-readable storage medium comprising instructions which, when executed by a computer, cause the computer to carry out the method of the present disclosure. Such a computer-readable storage medium may form part of a data processing apparatus according to the present disclosure. Thus, the instructions may be executed by the data processing apparatus according to the present disclosure. Consequently, a good trade-off may be reached between electromagnetic interferences and switching losses. In other words acceptable switching losses can be combined with acceptable electromagnetic interferences.

According to a fifth aspect, there is provided a gate driver system comprising at least two gate driver units. Each gate driver unit is configured to operate an associated switching module of a multi-level converter system. Moreover, the gate driver system comprises a data processing apparatus according to the present disclosure, wherein the data processing apparatus is communicatively connected to each of the gate driver units. Using such a gate driver system leads to a good trade-off between electromagnetic interferences and switching losses. In other words acceptable switching losses can be combined with acceptable electromagnetic interferences.

According to a sixth aspect, there is provided a multi-level converter system comprising a gate driver system according to the present disclosure and a multi-level conversion module, having at least one half-bridge comprising a number of cascaded switching modules, wherein a gate driver unit is operatively connected to each of the switching modules. Such a multi-level converter system has acceptable switching losses and acceptable electromagnetic interferences. Compared to known multi-level converter systems, filtering means for reducing electromagnetic interferences may be eliminated.

According to a seventh aspect, there is provided a vehicle comprising a gate driver system according to the present disclosure or a multi-level converter system according to the present disclosure. The vehicle may be an electric vehicle. Thus, only comparatively low electromagnetic interferences are generated and/or comparatively low losses are produced. Thus, the vehicle is efficient and/or may be designed in a simple manner in connection with means for reducing electromagnetic interferences.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows a vehicle according to the present disclosure comprising a multi-level converter system according to the present disclosure with a gate driver system according to the present disclosure, wherein the gate driver system comprises a data processing apparatus according to the present disclosure, a computer program according to the present disclosure, and a computer-readable storage medium according to the present disclosure such that the gate driver system may be operated using a method according to the present disclosure,
- Figure 2: shows exemplary switching modules for one phase of the multi-level converter system of Figure 1 and associated portions of the gate driver system of Figure 1, wherein the multi-level converter system is in a first operational state,
- Figure 3: shows exemplary switching modules for one phase of the multi-level converter system of Figure 1 and associated portions of the gate driver system of Figure 1, wherein the multi-level converter system is in a second operational state,
- Figure 4: shows exemplary switching modules for one phase of the multi-level converter system of Figure 1 and associated portions of the gate driver system of Figure 1, wherein the multi-level converter system is in a third operational state,
- Figure 5: shows other exemplary switching modules for one phase of the multi-level converter system of Figure 1 and associated portions of the gate driver system of Figure 1,
- Figure 6: shows a detail of the switching modules of Figures 2 to 5 and the gate driver system of Figures 2 to 5, and
- Figure 7: shows an alternative multi-level converter system according to the present disclosure.

The Figures are merely schematic representations and serve only to illustrate examples of the disclosure. Identical or equivalent elements are in principle provided with the same reference signs.

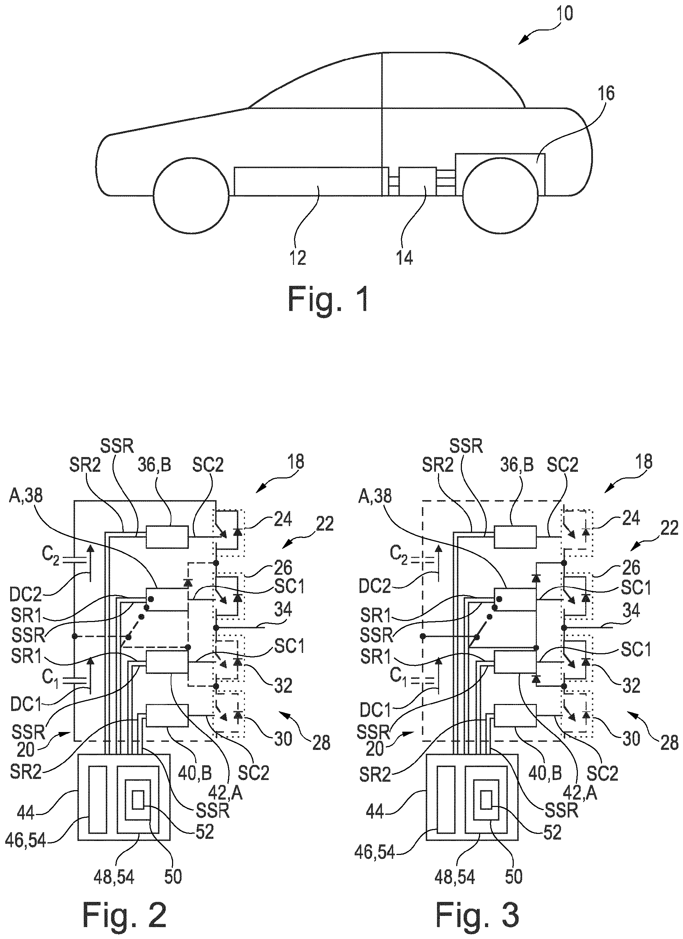

Figure 1 shows a vehicle 10 which in the present example of this is a battery electric vehicle.

The vehicle 10 comprises an electric battery unit 12, a multi-level converter system 14 and an electric traction motor 16. It is noted that the multi-level converter system 14 is represented next to the electric traction motor 16 for the purpose of illustration only. Of course, the multi-level converter system 14 may also be arranged on top of the electric traction motor 16. In such a configuration, the length of the conductors between the multi-level converter system 14 and the traction motor 16 can be reduced. This has a beneficial effect on electromagnetic interferences.

The electric battery unit 12 is electrically coupled to the multi-level converter system 14. In the present example, the multi-level converter system 14 is an inverter system.

The multi-level converter system 14, i.e. the inverter system, is electrically connected to the electric traction motor 16. Consequently, electric energy being provided by the electric battery unit 12 can be used for operating the electric traction motor 16.

Moreover, in the present example, the electric traction motor 16 is a three phase motor.

Figures 2 to 4 show a portion of the multi-level converter system 14 in more detail. It is noted that the portion relates to components being associated with a single phase only. The components relating to the remaining two phases are the same. Of course, it is also possible to apply the same concept to converter systems having two phases only or more than three phases.

For each phase, the multi-level converter system 14 comprises a multi-level conversion module 18 and a corresponding gate driver system 20.

In the present example, the multi-level conversion module 18 comprises an upper half bridge 22 with a total of two switching modules being designated as first switching module 24 and second switching module 26 in the following.

The first switching module 24 and the second switching module 26 are electrically connected in series. In other words, the first switching module 24 and the second switching module 26 are cascaded.

Additionally, the multi-level conversion module 18 comprises a lower half bridge 28 with a total of two switching modules being designated as third switching module 30 and forth switching module 32 in the following.

The third switching module 30 and the fourth switching module 32 are electrically connected in series. In other words, the third switching module 30 and the fourth switching module 32 are cascaded.

Additionally, the multi-level conversion module 18 comprises two capacitors being denoted C 1 and C2 which, in a simplified manner, are represented as sources of DC signals DC1 and DC2.

An AC output line 34 is electrically connected between the second switching module 26 and the fourth switching module 32.

The gate driver system 20 comprises a total of four gate driver units being designated as first gate driver unit 36, second gate driver unit 38, third gate driver unit 40 and fourth gate driver unit 42.

Each of the gate driver units 36, 38, 40, 42 is electrically connected to one of the first to fourth switching modules 24, 26, 30, 32.

In more detail, the first gate driver unit 36 is electrically connected to the first switching module 24. The second gate driver unit 38 is electrically connected to the second switching module 26. The third gate driver unit 40 is electrically connected to the third switching module 30. The fourth gate driver unit 42 is electrically connected to the fourth switching module 32.

Each gate driver unit 36, 38, 40, 42 is configured to operate the switching module 24, 26, 30, 32 to which it is electrically connected.

To this end, each of the gate driver units 36, 38, 40, 42 is configured to provide an appropriate switching control signal to the associated switching module 24, 26, 30, 32. In this context, i.e. in order to be able to provide the appropriate switching control signal, each of the gate driver units 36, 38, 40, 42 may be provided with a switching state reference signal SSR. The switching state reference signal SSR carries an information on the switching state to be achieved at the associated switching module 24, 26, 30, 32.

Moreover, the gate driver system 20 comprises a data processing apparatus 44.

The data processing apparatus 44 comprises a data processing unit 36 and a data storage unit 48.

The data storage unit 48 comprises a computer-readable storage medium 50. The computer-readable storage medium 50 comprises instruction which, when executed by the data processing unit 46 or, more generally, a computer cause the computer or the data processing unit 46 to carry out a method for operating a gate driver system for a multi-level converter system.

Moreover, on the computer-readable storage medium 50, there is provided a computer program 52. The computer program 52 comprises instruction which, when the computer program 52 is executed by the data processing unit 46 or, more generally speaking, a computer, cause the computer or at the data processing unit 46 to carry out a method for operating a gate driver system for a multi-level converter system.

Thus, the data processing unit 46 and the data storage unit 48 form means 54 for carrying out the method for operating a gate driver system for a multi-level converter system.

Before the method for operating a gate driver system for a multi-level converter system is explained in detail, the general functioning of the multi-level conversion module 18 will be explained. To this end, Figures 2 to 4 show different operational states of the multi-level converter system 14, more precisely the multi-level conversion module 18.

A first operational state is shown in Figure 2. In this operational state, the first switching module 24 and the second switching module 26 are closed. The third switching module 30 and the fourth switching module 32 are open. Thus, a positive voltage signal may be provided to the AC output line 34. The first operational state may also be called a P state.

A second operational state is shown in Figure 3. In this operational state, the second switching module 26 and the fourth switching module 32 are closed, the first switching module 24 and the third switching module 30 are open. This second operational state may also be called a 0 state.

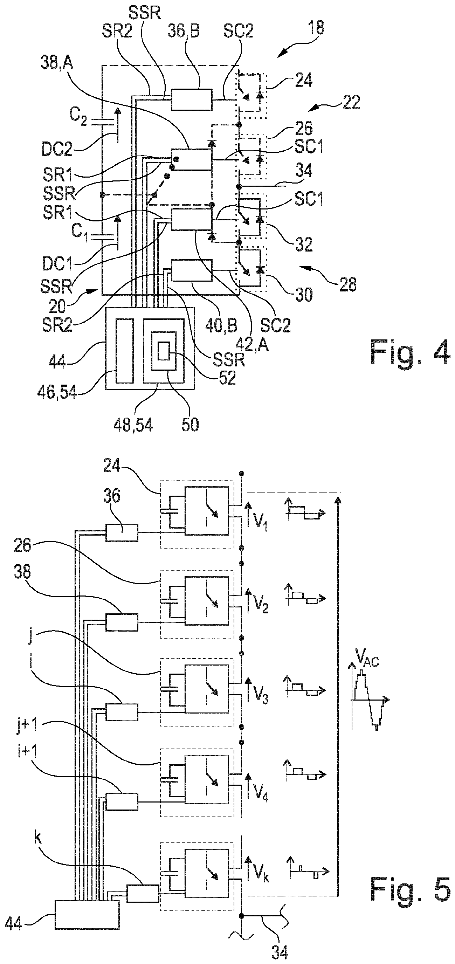

A third operational state is shown in Figure 4. In this operational state, the third switching module 30 and the fourth switching module 32 are closed. The first switching module 24 and the second switching module 26 are open. Thus, a negative voltage signal may be provided to the AC output line 34. The third operational state may also be called a N state.

In summary, a desired AC output signal may be provided at the AC output line 34 by appropriately switching between the first operational state, the second operational state and the third operational state while at the same time controlling and adjusting the time span during which the first operational state, the second operational state and the third operational state are maintained respectively.

This is also illustrated in Figure 5. Figure 5 shows a single half bridge with k switching modules.

In the representation of Figure 5, the gate driver units are noted with index i. The switching modules are noted with index j.

Only the gate driver unit k forms part of a first subset A of gate driver units. The remaining gate driver units form part of a second subset B.

The half bridge of Figure 5 may be used to replace any one of the upper half bridge 22 and the lower half bridge 28 of the multi-level conversion modules 18 as shown in Figures 2 to 4.

As has been mentioned above, the gate driver system 20 may be operated using a method for operating a gate driver system for a multi-level converter system.

The basic idea underlying this method is to switch the different switching modules 24, 26, 30, 32 at different switching speeds. To this end, appropriate switching control signals have to be provided to the switching modules 24, 26, 30, 32 by the associated gate driver units 36, 38, 40, 42.

In a first step S1 of the method, a first subset A of gate driver units 36, 38, 40, 42and a second subset B of gate driver units 36, 38, 40, 42 is provided.

The subsets A, B of gate driver units 36, 38, 40, 42 are overlap-free. This means that each gate driver unit 36, 38, 40, 42 belongs to one of the subsets A, B only.

Based thereon, in a second step S2, a first switching speed is assigned to the gate driver units 36, 38, 40, 42 of the first subset A and a second switching speed is assigned to the gate driver units 36, 38, 40, 42 of the second subset B. The switching speeds are different.

In the present example, the second gate driver unit 38 and the fourth gate driver unit 42 form part of the first subset A and the first gate driver unit 36 and the third gate driver unit 40 form part of the second subset B.

The second gate driver unit 38 and the fourth gate driver unit 42 are configured to switch the connected second switching module 26 and fourth switching module 32 at a comparatively high switching speed. The first gate driver unit 36 and the third gate driver unit 40 are configured to switch the connected first switching module 24 and third switching module 30 at a comparatively low switching speed.

In the present example, the gate driver units 36, 38, 40, 42 are assigned to the first subset A and to the second subset B respectively by solving an objective function using an optimization technique. The objective function comprises a first term describing switching losses as a function of a switching speed of the first switching module 24, the second switching module 26, the third switching module 30 and the fourth switching module 32. Additionally, the objective function comprises a second term describing electromagnetic interferences resulting from the switching of any one of the first switching module 24, the second switching module 26, the third switching module 30 and the fourth switching module 32. Also the second term is a function of switching speed.

In the present example, a boundary condition of the optimization problem is that only two different switching speeds may be used.

It is noted that, of course, in other examples more than two subsets of gate driver units in more than two different switching speeds may be determined.

Consequently, in a third step S3, a first switching control signal SC1 is provided to the switching modules being associated with the gate driver units of the first subset A using the gate driver units of the first subset A.

In the present example, the second gate driver unit 38 and the fourth gate driver unit 42 form the first subset A. The second switching module 26 and the fourth switching module 32 are associated thereto.

The first switching control signal SC1 is configured to trigger switching of the associated switching modules, i.e. the second switching module 26 and the fourth switching module 32 at a first switching speed.

An appropriate first switching control signal SC1 may be determined using a lookup table which may be stored on the data storage unit 48.

Moreover, in the third step S3, a second switching control signal SC2 is provided to the switching modules being associated with the gate driver units of the second subset B using the gate driver units of the second subset B.

In the present example, the first gate driver unit 36 and the third gate driver unit 40 form the second subset B. The first switching module 24 and the third switching module 30 are assigned thereto.

The second switching control signal SC2 is configured to trigger switching of the associated switching modules, i.e. the first switching module 26 and the third switching module 30 at a second switching speed.

An appropriate second switching control signal SC2 may be determined using a lookup table which may be stored on the data storage unit 48.

In the present example, the first switching control signal SC 1 is configured to trigger faster switching than the second switching control signal SC2.

Furthermore, the first switching control signal SC 1 and the second switching control signal SC2 are pulse width modulation signals.

It is noted that the third step S3 is performed when the multi-level converter system 14 is in operation.

When considering the AC output signal being delivered via AC output line 34, the second switching control signal SC2 is provided to switching modules being associated to a high voltage region, i.e. a region of high positive voltage or high negative voltage.

In the present example, this applies to the second switching module 26 and the fourth switching module 34. Due to the functioning of pulse width modulation, the second switching module 26 and the fourth switching module 32 have to be switched more often than the first switching module 24 and the third switching module 30.

As has been explained above, the first switching control signals SC1 and the second switching control signals SC2 are generated based on a corresponding switching state reference signal SSR which is provided by the gate driver units 36, 38, 40, 42 by the data processing apparatus 44.

Since faster switching is more efficient, i.e. produces less switching losses, the overall efficiency is enhanced by switching the second switching module 26 and the fourth switching module 32 in a relatively fast manner.

Slower switching reduces the electromagnetic interferences. Thus, by switching the first switching module 24 and the third switching module 30 at a comparatively low switching speed, electromagnetic interferences are reduced.

In the present example, the switching speeds are controlled in a closed loop. To this end, a first switching speed reference signal SR1 is determined. To this end, also the lookup table may be used. The first switching speed reference signal SR1 is provided to the gate driver units of the first subset A, i.e. the second gate driver unit 38 and the fourth gate driver unit 42.

In the same manner, a second switching speed reference signal SR2 is determined. Again, the lookup table may be used. The second switching speed reference signal SR2 is provided to the gate driver units of the second subset B, i.e. the first gate driver unit 36 and the third gate driver unit 40.

Also the first switching speed reference signal SR1 is a pulse width modulation signal and the second switching speed reference signal SR2 is a pulse width modulation signal.

Moreover, both the first switching speed reference signal SR1 and the second switching speed reference signal SR2 is a slew rate reference signal.

This means that switching speed of the switching modules is controlled using a slew rate control technique.

It is understood that to this end a slew rate measurement SM may be provided to the data processing apparatus 44. The slew rate measurement SM can be used to perform a closed-loop control of the slew rate.

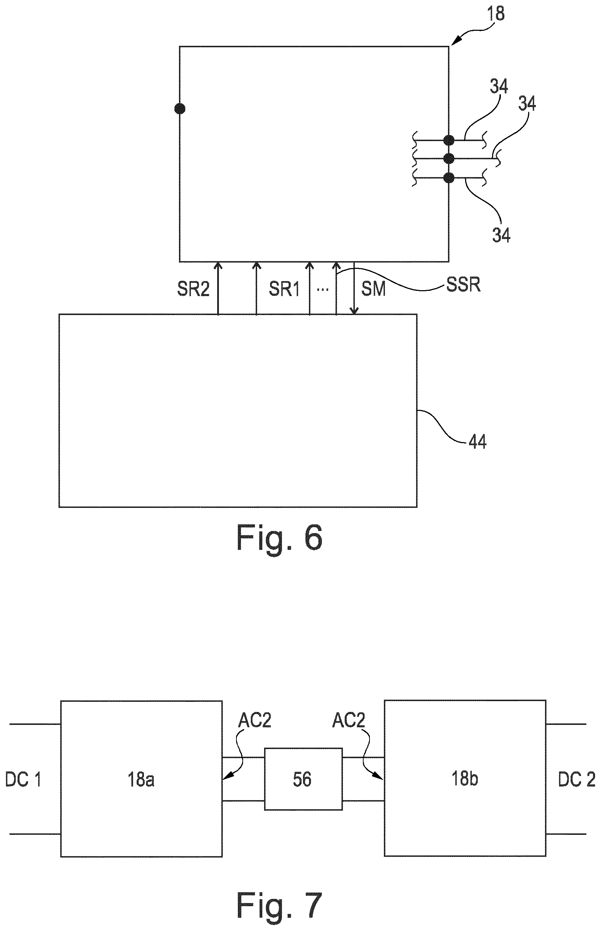

An overview of the input and output of the data processing apparatus 44 can be seen in Figure 6.

Figure 7 schematically shows a further example of a multi-level converter system 14. In the example of Figure 7, the multi-level converter system 14 is a DC-DC converter.

The multi-level converter system 14 of Figure 7 comprises two multi-level conversion modules 18a, 18b and a transformer 56 being interposed there between. Thus, a DC input signal DC1 may be transformed into a first AC signal AC1 which is converted into a second AC signal AC2 by the transformer 56. Then, the second AC signal AC2 is input to the second multi-level conversion modules 18b and transformed into a second DC signal DC2 which at the same time is an output signal.

Both multi-level conversion modules 18 a and 18b may be designed in accordance with the multi-level conversion modules 18 of Figures 2 to 5.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: electric battery unit
- 14: multi-level converter system
- 16: electric traction motor
- 18: multi-level conversion module
- 18a: multi-level conversion module
- 18b: multi-level conversion module
- 20: gate driver system
- 22: upper half bridge
- 24: first switching module
- 26: second switching module
- 28: lower half bridge
- 30: third switching module
- 32: fourth switching module
- 34: AC output line
- 36: first gate driver unit
- 38: second gate driver unit
- 40: third gate driver unit
- 42: fourth gate driver unit
- 44: data processing apparatus
- 46: data processing unit
- 48: data storage unit
- 50: computer-readable storage medium
- 52: computer program
- 54: means for carrying out a method for operating a gate driver system for a multi-level converter system
- 56: transformer
- A: first subset of gate driver units
- B: second subset of gate driver units
- C1: capacitor
- C2: capacitor
- DC1: DC signal
- DC2: DC signal
- S1: first step
- S2: second step
- S3: third step
- SC1: first switching control signal
- SC2: second switching control signal
- SR1: first switching speed reference signal
- SR2: second switching speed reference signal
- SM: slew rate measurement
- SSR: switching state reference signal

## Claims

1. A method for operating a gate driver system (20) for a multi-level converter system (14), the multi-level converter system (14) having at least one half-bridge comprising a number of cascaded switching modules (24, 26, 30, 32), and the gate driver system (20) comprising at least two gate driver units (36, 38, 40, 42), wherein each gate driver unit (36, 38, 40, 42) is configured to operate an associated switching module (24, 26, 30, 32) of the multi-level converter system (14), comprising:
- providing at least a first subset (A) of gate driver units (36, 38, 40, 42) and a second subset (B) of gate driver units (36, 38, 40, 42), the subsets (A, B) of gate driver units (36, 38, 40, 42) being overlap-free (S1), and
- assigning a first switching speed to the gate driver units (36, 38, 40, 42) of the first subset (A) and a second switching speed to the gate driver units (36, 38, 40, 42) of the second subset (B), wherein the switching speeds are different (S2), and
- providing a first switching control signal (SC1) to the switching modules (24, 26, 30, 32) being associated with the gate driver units (36, 38, 40, 42) of the first subset (A) using the gate driver units (36, 38, 40, 42) of the first subset (A), wherein the first switching control signal (SC1) is configured to trigger switching of the associated switching modules (24, 26, 30, 32) at the first switching speed and providing a second switching control signal (SC2) to the switching modules (24, 26, 30, 32) being associated with the gate driver units (36, 38, 40, 42) of the second subset (B) using the gate driver units (36, 38, 40, 42) of the second subset (B), wherein the second switching control signal (SC2) is configured to trigger switching of the associated switching modules (24, 26, 30, 32) at the second switching speed (S3).

2. The method of claim 1, further comprising determining a first switching speed reference signal (SR1) for the gate driver units (36, 38, 40, 42) of the first subset (A), and/or determining a second switching speed reference signal (SR2) for the gate driver units (36, 38, 40, 42) of the second subset (B).

3. The method of claim 2, wherein the first switching speed reference signal is a pulse width modulation signal and/or wherein the second switching speed reference signal is a pulse width modulation signal.

4. The method of any one of claims 2 and 3, wherein the first switching speed reference signal and/or the second switching speed reference signal is a slew rate reference signal.

5. The method of any one of the preceding claims, wherein the first switching control signal and/or the second switching control signal is a pulse width modulation signal.

6. The method of any one of the preceding claims, wherein the first switching control signal and/or the second switching control signal is a fundamental mode switching signal.

7. The method of any one of the preceding claims, wherein the first switching control signal is provided to switching modules (36, 38, 40, 42) being associated to a high voltage region.

8. The method of any one of the preceding claims, further comprising assigning gate driver units (36, 38, 40, 42) to the first subset (A) and assigning gate driver units (36, 38, 40, 42) to the second subset (B) by optimizing an objective function describing switching losses and electromagnetic interferences of the switching modules (24, 26, 30, 32) of the multi-level converter system (14).

9. The method of any one of the preceding claims, wherein the first switching control signal and the second switching control signal are generated based on a look-up table.

10. A data processing apparatus (44) comprising means (54) for carrying out the method of any one of the preceding claims.

11. A computer program (52) comprising instructions which, when the program is executed by a computer, cause the computer to carry out the method of claims 1 to 9.

12. A computer-readable storage medium (50) comprising instructions which, when executed by a computer, cause the computer to carry out the method of claims 1 to 9.

13. A gate driver system (20) comprising at least two gate driver units (36, 38, 40, 42), wherein each gate driver unit (36, 38, 40, 42) is configured to operate an associated switching module (24, 26, 30, 32) of a multi-level converter system (14), and a data processing apparatus (44) according to claim 10, wherein the data processing apparatus (44) is communicatively connected to each of the gate driver units (36, 38, 40, 42).

14. A multi-level converter system (14) comprising a gate driver system (20) according to claim 13 and a multi-level conversion module (18), having at least one half-bridge comprising a number of cascaded switching modules (24, 26, 30, 32), wherein a gate driver unit (36, 38, 40, 42) is operatively connected to each of the switching modules (24, 26, 30, 32).

15. A vehicle (10) comprising a gate driver system (20) according to claim 13 or a multi-level converter system (14) according to claim 14.
